# EUROPEAN PATENT APPLICATION

(11) **EP 1 005 002 A1**
(43) Date of publication of application: **31.05.2000**
(21) Application number: 98650075.9
(22) Date of filing: 16.11.1998
(51) Int. Cl.: G07F 19/00, G07C 9/00, G10L 15/28

(54) **A spoken transaction processing system**

(71) Applicant: Buy-Tel Innovations Limited, Dublin 2 (IE)
(72) Inventor: Harris, Vance, Monkstown, County Dublin (IE); Keaney, Patrick Peter, Monkstown, County Dublin (IE)
(74) Representative: Weldon, Michael James

(57) **Abstract**

A transaction processing system (1) has a central hub (2) which interconnects a high-speed database server (3), a voice processing server (5), and an interface server (6). The voice processing server (5) has a central processor and distributed processors including telephony interface circuits (5(a), station interface circuits (5b), speech recognition DSPs (5c), and text-to-speech circuits (5d). The server (5) distributes processing in such a way that a user can make a telephone call to the system and convey data for a transaction by normal speech. The system uses this data to generate transaction records and to process transactions.

## Description

The invention relates to a transaction processing system.

One of the problems in management of business at present is that of processing relatively small transactions in an efficient manner. Such processing tends to add a proportionally high overhead to a business, and in many cases it is not done correctly.

The invention is therefore directed towards providing a transaction processing system which allows relatively small transactions to be handled efficiently.

According to the invention, there is provided a transaction processing system comprising:-
a central processor connected to telephony interface circuits, to a speech recognition circuit, and to a text-to-speech circuit;
a high speed database server;
a voice verification sub-system;
means in the central processor to:-
   control the telephony interface circuit and the text-to-speech circuit to receive user speech,
   control the speech recognition circuit to recognise a user code in the user's speech,
   direct user verification by the voice verification sub-system with reference to a stored user voice model,
   generate a transaction record in the database server and initiate a transaction if user verification is positive, and
   transmit user transaction data to a remote system via the telephony circuit.

The system therefore allows transactions to be initiated by the user simply making a call to the system and transmitting transaction information by normal speech. The system automatically performs user verification, generates a transaction record, and transmits transaction data to a client remote site. Thus, the system allows provision of comprehensive transaction processing services without the need for users to be specially trained. All they need to do is to dial a particular telephone number and speak the information which is required.

In one embodiment, the central processor comprises means for directing recordal of a user's speech, and analysis of the speech to generate transaction data for the transaction record. This allows recordal of the speech which initiates the transaction for subsequent validation, and it also allows comprehensive transaction processing.

In one embodiment, the speech record is stored locally at the central processor and the central processor establishes a relationship between the speech record and an associated transaction record on the database server.

Preferably, the central processor comprises means for retrieving multiple transaction records from the database server and batch processing the transaction records to generate client transaction reports.

In one embodiment, the system further comprises an interface server connected to the central processor and to the database server, and comprising means for providing supervisor access to data and speech records, and for compiling the records to generate reports.

Preferably, the system comprises a hub, and the database server, the central processor and the interface server are connected to each other via the hub.

In another embodiment, the voice verification sub-system is connected to the hub.

In another embodiment, the interface server is connected directly to a backup system, and the interface server comprises means for directing retrieval of transaction records from the database server and speech records from the central processor to back up data.

Preferably, the hub comprises wide area network interface circuits for administration terminals.

In another embodiment, the central processor comprises means for inserting a flag in a sub-set of the speech records generated, and means for subsequently retrieving flagged speech records for quality control.

Preferably, the voice verification sub-system comprises a frequency domain voice model to represent user vocal tract characteristics.

In another embodiment, the voice verification sub-system comprises means for generating accept, reject, and uncertain output signals, and the central processor comprises means for processing an uncertain output signal to determine if verification is positive or negative.

Preferably, the central processor comprises means for processing security level data in the user record to determine the verification output.

The invention will be more clearly understood from the following description of some embodiments thereof, given by way of example only with reference to the accompanying drawings in which:-
Fig. 1 is a diagram illustrating a transaction processing system of the invention;
Fig. 2(a) and 2(b) are together a is a flow chart illustrating operation of a system;
Figs. 3, 4, and 5 are plots showing voice verification parameters; and
Fig. 6 is a flow diagram illustrating transaction processing.

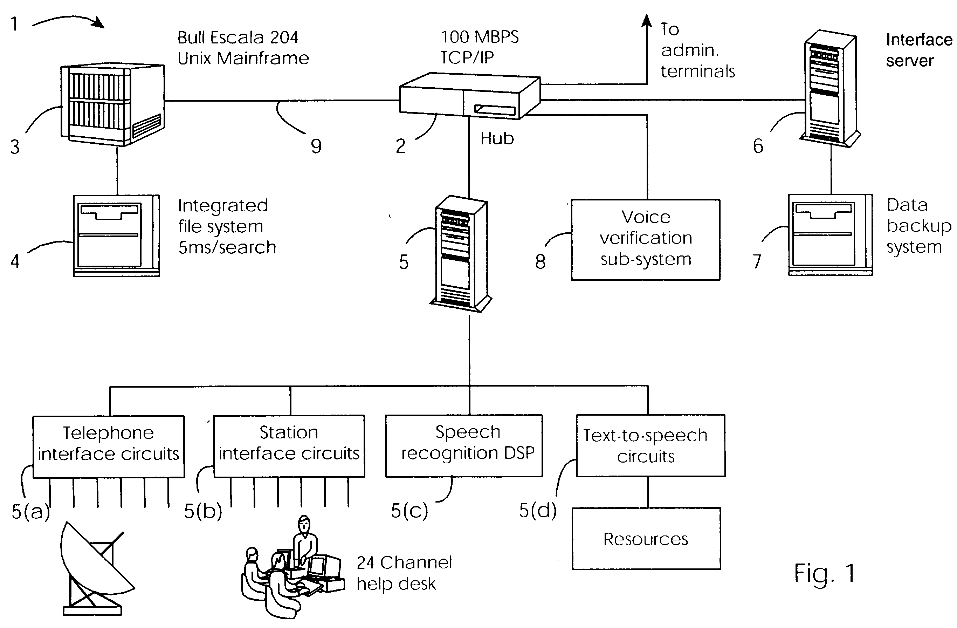

Referring to the drawings, and initially to Fig. 1 there is shown a transaction processing system 1 of the invention.

The system 1 comprises a 100 Mbit/s hub 2 which controls TCP/IP communication between circuits within the system 1. It also comprises wide area network interface circuits for administration terminals. These terminals are used by staff in providing transaction processing services using the system 1.

The hub 2 is connected by 100Mbit/s UTP cable to a Bull Escala 204™ Unix mainframe symmetrical multi-processing system 3. This provides high speed access to an Integrated File System (IFS) database 4 which stores user and transaction records. The file search time is approximately 5ms and this time is stable because it is independent of the database size. There may be many millions of records in the database.

The system 1 also comprises a central controller 5 connected to the hub 2. The controller 5 comprises a central processor and distributed processors 5(a) to 5(d) connected to it by an internal system bus. The distributed processors are described in more detail below.

An NT™ interface server 6 is also connected to the hub 2, and is also directly connected to a data backup system 7. The interface server 6 is programmed to operate a an supervisor interface to the mainframe 3 and the central controller 5. It also operates to back up files on these devices. An important aspect of the interface server 6 is that it provides a central GUI interface to the storage structures of the mainframe 3 and the IFS 4 and the central controllers 5.

Referring again to the central contrller 5, this comprises a set of ISDN digital telephony interface circuits 5(a). These circuits include Calling Line Identification (CLI) circuits to determine the source of a telephony connection. Station interface circuits 5(b) allow connection of users to a help desk. The connection is via a TDM bus. Speech recognition DSPs 5(c) are programmed for speech recognition of multiple languages. Finally, the controller 5 comprises a text to speech telephony circuit 5(d) with associated resources.

The system 1 also comprises a voice verification sub-system 8 connected directly to the hub 2. The sub-system 8 comprises a processor programmed with user voice models to verify users who call via the ISDN telephony circuits 5(a).

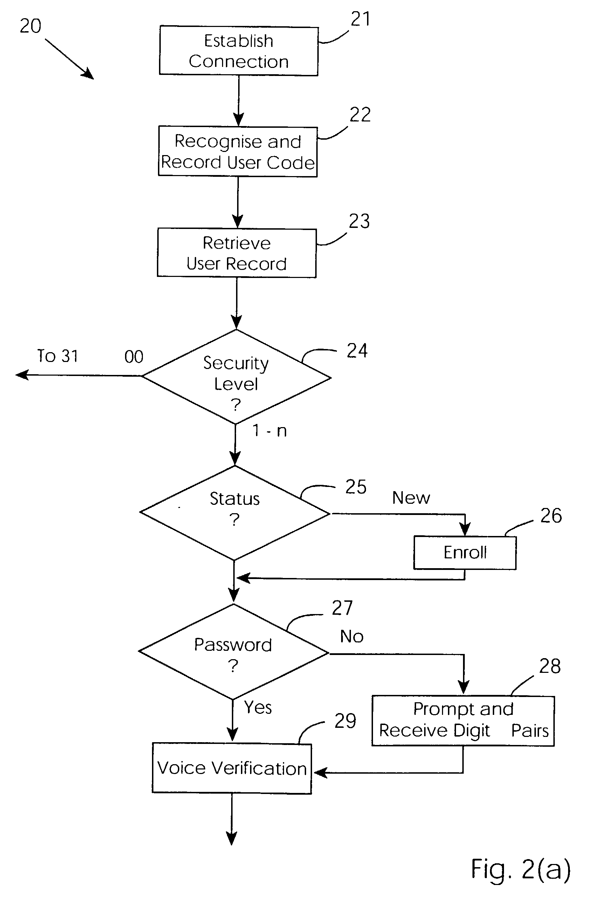

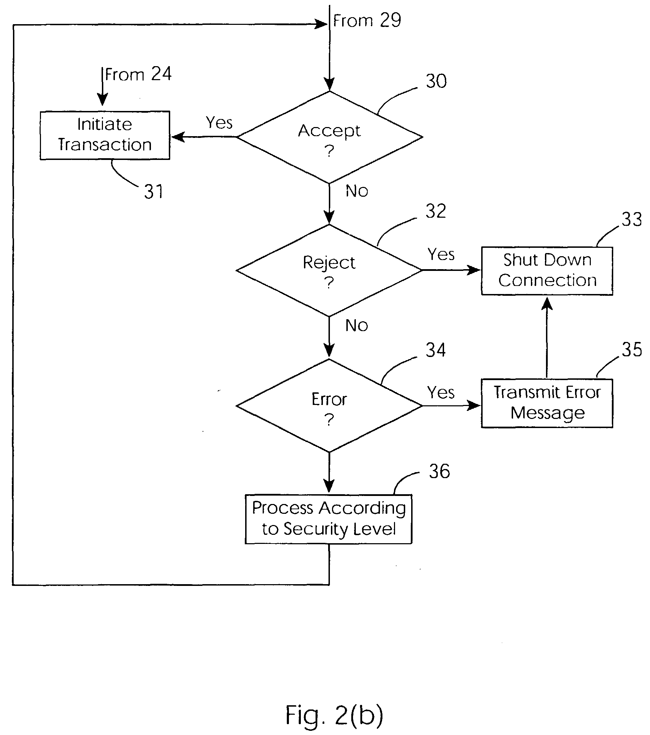

Referring now to Fig. 2, operation of the system 1 is now described as a method 20. This method involves a user connecting with the system 1, being verified, and a transaction being performed. The system is suited to processing large volumes of transactions, thus removing a major administration workload from clients.

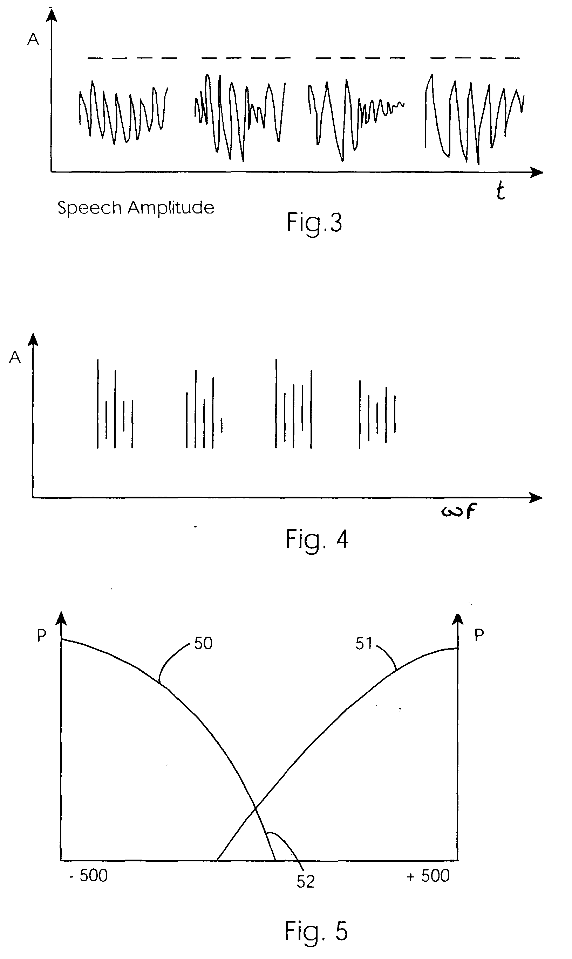

In step 21 a user of a client establishes a telephony connection at an interface circuit 5(a). The call may be temporarily routed to a station interface circuit 5(b) if assistance is required. The central processor of the controller 5 directs the speech recognition DSP 5(c) to recognise and record a spoken user code such as an account number in step 22. This code is used in step 23 by the central processor of the controller 5 to retrieve a user record from the IFS 4. This record includes a security level for the particular user. If this level is 00 as indicated by the decision step 24, the central processor immediately initiates a transaction (step 31) without verification. If the security level is not 00, in step 25 the central processor determines whether the user has yet been enrolled. If not, in step 26 the central processor directs the text to speech circuits 5(d) to generate a series of prompts for the user to speak. These are preferably digit pairs such as "57" or "21". These voice strings are used by the voice verification sub-system 8 to generate a user voice model. This model describes the user's vocal tract on the basis of sound parameters with conversion from the time domain as illustrated in Fig. 3 to the frequency domain as illustrated in Fig. 4. Fig. 3 shows the amplitudes of four speech bursts, each one being a numeral. Fig. 4 shows a set of corresponding signatures for these speech bursts in the frequency domain.

In step 27 the central processor 5 determines a "password" status for the user from the user record. If negative, in step 28, the central processor directs the circuits 5(d) to generate speech prompting user speech strings for voice verification. These are again typically digit pairs. The inputs used for comparison with the voice model are either the spoken user code received in step 22 if the password status is "yes" or the digit pairs received in step 28 if the password status is "no".

The voice verification sub-system 8 then performs voice verification in step 29 using the voice model for the user.

There are only four possible outputs of the sub-system 8, namely "accept", "reject", "error", or "uncertain". Referring to Fig. 5, the manner in which these outputs are determined is shown. Fig. 5 is a plot of single-sided probability as a function of score. If the verification output is in the region 50 then the output is "accept". If in the region of 51 the output is "reject". If in the region of 52 the output is "uncertain". Finally, the output is "error" if no meaningful user speech was received.

The manner in which the central processor handles the verification outputs is illustrated by the steps 30 to 36 in Fig. 2(b). An "accept" output results in a transaction being initiated in step 31. If "reject", as indicated by the decision step 32, the central processor in step 33 shuts down the user connection in an appropriate manner. If "error", as indicated by the decision step 34 the processor transmits an error message in step 35 and shuts down the connection in step 33.

The central processor processes an "uncertain" output according to the user's security level, which is determined from the user record. The security level indicates if such a verification output should be converted to "accept" or "reject". The level may indicate that additional interactivity is required such as prompting additional speech inputs or discussion with a staff member.

To initiate a transaction (step 31), the central processor directs the mainframe 3 to create a transaction record on the IFS 4. A variety of different transactions may be performed.

For example, the transaction may be processing of an order for goods such as stationery. A supplier processes the order and the system 1 receives updates of transaction progress and automatically updates the transaction record. The system 1 also automatically generates client reports indicating progress of a transaction. These reports draw from multiple transaction records for a single client so that the data is consolidated.

For three-way transactions, the central processor automatically links the user to a third party, such as a goods supplier. They have a discussion, and all speech is recorded. Again, the speech generates data in the system. This is subsequently used for tracking the records of the third party and verifying their data.

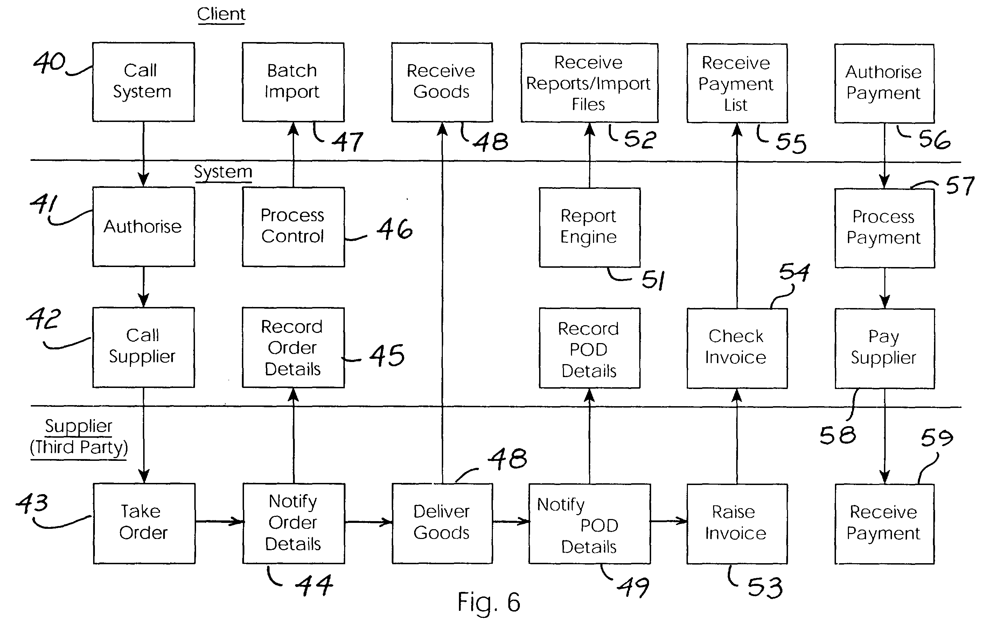

In more detail, and referring specifically to Fig. 6, the system 1 is called by the user in step 40. The user code is recognised and the user verified in step 41, upon which the telephony interface circuit 5(a) calls the system of a goods supplier in step 2. The supplier is identified from the user record. There is then a voice discussion in step 43 in which the supplier takes the order, and the order details are notified in step 44. The supplier system transmits the order details to the system 1 upon which the central processor directs updating of the transaction record via the mainframe 3 and the IFS 4. The central processor carries out process control (step 46) by automatically updating the transaction record as data is received. Batch reports are generated in step 47. These are typically initiated by the interface server 6.

The goods are delivered in step 48, upon which the supplier system is updated in step 49 and, in turn, the system 1 is updated in step 50. A report engine in the interface server 6 in step 51 generates a transaction report, which is received in step 52. When the supplier raises an invoice (step 53), this is validated in step 54 and a payment list is transmitted to the client in step 55. The client system authorises the payment in step 56 and it is processed by the system 1 in step 57. The supplier is paid in steps 58 and 59.

It will be appreciated that the system 1 operates in parallel to that of the supplier, allowing tracking of progress and also generation of management reports for the client. Therefore, the system is again performing important administration for the client - a very useful service, particularly for supply of small items such as stationery for an office. It will be appreciated that the system 1 operates in parallel to that of the supplier, allowing tracking of progress and also generation of management reports for the client. Therefore, the system is again performing important administration for the client.

An important feature of the system 1 is that it has the capability to record the user's speech. This forms the basis of many types of transactions. In a two-way transaction, the speech is processed to generate transaction data. This may be automatic, manual, or a combination. For example, for manual processing a staff member listens and inputs data very quickly using a pointing device to select displayed options. An example is apportioning time of the user to different jobs for time recording. In this case a GUI allows very quick linking of time to jobs without the need to use a keyboard. The speech is stored in a speech record on the controller 5, which is cross referenced to the transaction record on the IFS 4. The speech is stored as an ALAW algorithm encoded. silence compressed sound file in 8 bit and 8 kHz format.

In another transaction example, the central processor directs the interface circuits 5(a) to identify the source of the connection. It uses this information together with a time stamp for the call to generate a transaction. In this example there is no speech recording and the system simply records time stamps for clients users "clocking in" and clocking out" of work. The central processor may use data in a previously-generated transaction record or the user record to generate speech transmitted to the user. An example is to inform the user that he or she did not "clock out" the previous day. The data in the transaction records for this service may be uploaded to a client's system for processing at their end.

Quality control in the system is achieved by the central processor inserting a flag in transaction records at regular intervals, such as every 20 records. These flags are used by a supervisor to retrieve these records and check that the data is correct according to the recorded speech.

The interface server 6 operates to interrogate the transaction record on the IFS 4 and the corresponding speech records on the controller 5. It thus acts as a central data retrieval and processing node which has equal access to data and speech records. This is very important for generation of reports for clients which include data relating to many users. For example, monthly time recording reports may be provided. The server 6 also controls backup of data using the backup system 7. Again, it does this by retrieving data from both the IFS 4 and the voice processing server 5. It has been found that by distributing the processing across the various processors of the voice central controller 5, the mainframe 3 and the IFS 4, and the interface server 6, the system 1 has a very large processing capacity. Indeed, it has been found that many millions of transaction records in the IFS 4 may be handled without any appreciable delay in response time. The central processor of the voice processing server 5 acts to co-ordinate the distributed processing in a very effective manner in conjunction with the mainframe 3.

It has been found that by recording speech to activate transactions, a comprehensive range of types of transactions may be processed. The system 1 allows a service to be provided to clients whereby users (typically employees of the client) do not need to familiarise themselves with any new technology or procedures. It is only necessary that they dial a particular number and speak in the normal manner to initiate a transaction. In this way, a huge administration overhead is taken off the clients and therefore, the system 1 may be used to provide a very valuable service. Also, because voice is stored, integrity of the data can be ensured because a record is available. Of course, the quality control check using the flags to retrieve records also helps to ensure integrity. Another advantage of the system 1 is the manner in which users are verified, which allows a large degree of flexibility. The procedure ranges from immediate activation of transactions to comprehensive "digit pair" voice verification before access is allowed.

The invention is not limited to the embodiments described, but may be varied in construction and detail within the scope of the claims

## Claims

1. A transaction processing system (1) comprising:-
a central processor (5) connected to telephony interface circuits (5(a)), to a speech recognition circuit (5(a)), and to a text-to-speech circuit (5(a));
a high speed database server (3, 4);
a voice verification sub-system (8);
means in the central processor (5) to:-
control the telephony interface circuit and the text-to-speech circuit to receive user speech (22),
control the speech recognition circuit to recognise (22) a user code in the user's speech,
direct user verification (29) by the voice verification sub-system with reference to a stored user voice model,
generate a transaction record (31) in the database server and initiate a transaction if user verification is positive, and
transmit user transaction data to a remote system via the telephony circuit.

2. A system as claimed in claim 1, wherein the central processor comprises means for directing recordal of a user's speech, and analysis of the speech to generate transaction data for the transaction record.

3. A system as claimed in claim 2, wherein the speech record is stored locally at the central processor (5) and the central processor establishes a relationship between the speech record and an associated transaction record on the database server (3, 4).

4. A system as claimed in any preceding claim, wherein the central processor (5) comprises means for retrieving multiple transaction records from the database server (3, 4) and batch processing the transaction records to generate client transaction reports.

5. A system as claimed in claim 4, further comprising an interface server (6) connected to the central processor (5) and to the database server (3, 4), and comprising means for providing supervisor access to data and speech records, and for compiling records to generate reports.

6. A system as claimed in claim 5, wherein the system comprises a hub (2), and the database server (3, 4), the central processor (5) and the interface server (6) are connected to each other via the hub.

7. A system as claimed in claim 6, wherein the voice verification sub-system (8) is connected to the hub.

8. A system as claimed in claim 6 or 7, wherein the interface server (6) is connected directly to a backup system (7), and the interface server comprises means for directing retrieval of transaction records from the database server and speech records from the central processor (5) to back up data.

9. A system as claimed in any of claims 6 to 8, wherein the hub (2) comprises wide area network interface circuits for administration terminals.

10. A system as claimed in any of claims 3 to 9, wherein the central processor (5) comprises means for inserting a flag in a sub-set of the speech records generated, and means for subsequently retrieving flagged speech records for quality control.

11. A system as claimed in any preceding claim, wherein the voice verification sub-system (8) comprises a frequency domain voice model to represent user vocal tract characteristics.

12. A system as claimed in any preceding claim, wherein the voice verification sub-system (8) comprises means for generating accept, reject, and uncertain output signals, and wherein the central processor comprises means (30-36) for processing an uncertain output signal to determine if verification is positive or negative.

13. A system as claimed in claim 12, wherein the central processor (5) comprises means for processing security level data (36) in the user record to determine the verification output.
